# EUROPEAN PATENT APPLICATION

(11) **EP 4 645 456 A1**
(43) Date of publication of application: **05.11.2025**
(21) Application number: 24834228.9
(22) Date of filing: 12.08.2024
(51) Int. Cl.: H01M 4/36, H01M 4/58

(54) **POSITIVE ELECTRODE MATERIAL AND PREPARATION METHOD THEREFOR, POSITIVE ELECTRODE SHEET, SECONDARY BATTERY AND ELECTRIC DEVICE**

(30) Priority: 04.03.2024 CN 202410239215
(71) Applicant: Contemporary Amperex Technology Co., Limited, Jiaocheng District Ningde Fujian 352100 (CN)
(72) Inventor: YAN, Dujuan, Ningde, Fujian 352100 (CN); ZHANG, Fan, Ningde, Fujian 352100 (CN); SHI, Peng, Ningde, Fujian 352100 (CN); ZHAO, Yanjie, Ningde, Fujian 352100 (CN); LUO, Can, Ningde, Fujian 352100 (CN); LI, Xing, Ningde, Fujian 352100 (CN)
(74) Representative: Jacob, Reuben Ellis
(86) International application number: PCT/CN2024/111540
(87) International publication number: WO 2025/185071

(57) **Abstract**

This application provides a positive electrode material and a preparation method thereof, a positive electrode plate, a secondary battery (5), and an electrical device. The positive electrode material includes a conductive substrate material and an active material distributed on the conductive substrate material. The active material includes a nanoscale phosphate active material. The conductive substrate material includes doping element-modified graphene. Based on a total mass of the positive electrode material, a mass percent of the active material is 75% to 95%, and a mass percent of the conductive substrate material is 5% to 25%. In this application, the positive electrode material is prepared by using the doping element-modified graphene as a substrate material that carries nanoparticles of the phosphate active material, thereby reducing agglomeration of the nanoscale phosphate positive electrode material, enhancing the effect of an electrolyte solution in infiltrating the active material, and improving cycle performance of the positive electrode material.

## Description

### CROSS-REFERENCE TO RELATED APPLICATIONS

This application claims priority to Chinese Patent Application No. 202410239215.2, filed on March 4, 2024 and entitled "POSITIVE ELECTRODE MATERIAL AND PREPARATION METHOD THEREOF, POSITIVE ELECTRODE PLATE, SECONDARY BATTERY, AND ELECTRICAL DEVICE.

### TECHNICAL FIELD

This application relates to the field of battery technology, and in particular, to a positive electrode material and a preparation method thereof, a positive electrode plate, a secondary battery, and an electrical device.

### BACKGROUND

Batteries are widely used in electronic devices such as a mobile phone, a laptop computer, an electric power cart, an electric vehicle, an electric airplane, an electric ship, an electric toy car, an electric toy ship, an electric toy airplane, and an electric tool.

In the development of batteries, how to enhance the cycle performance of a battery is one of urgent problems to be solved currently.

### SUMMARY

Some embodiments of this application provide a positive electrode material and a preparation method thereof, a positive electrode plate, a secondary battery, and an electrical device to improve cycle performance of the secondary battery.

According to a first aspect, an embodiment of this application provides a positive electrode material, including a conductive substrate material and an active material distributed on the conductive substrate material. The active material includes a nanoscale phosphate active material. The conductive substrate material includes doping element-modified graphene. Based on a total mass of the positive electrode material, a mass percent of the active material is 75% to 95%, and a mass percent of the conductive substrate material is 5% to 25%.

In this embodiment of this application, the positive electrode material is prepared by using the doping element-modified graphene as a substrate material that carries nanoparticles of the phosphate active material, the doping element-modified graphene serves as a substrate on which the phosphate active material particles are anchored by a van der Waals force, thereby reducing agglomeration of the nanoscale phosphate positive electrode material, making the distribution of the active material more uniform, and in turn, enhancing the effect of an electrolyte solution in infiltrating the active material, and improving cycle performance of the positive electrode material. The nanoscale phosphate active material possesses a relatively large specific surface area and a relatively short lithium-ion diffusion distance, thereby improving the lithium-ion diffusion kinetics of the positive electrode material and improving the electrochemical performance of the positive electrode material. The high conductivity of the doping element-modified graphene can improve the electronic conductivity of the positive electrode material. The excellent mechanical properties of the graphene can buffer the stress of the positive electrode material during charge and discharge, and improve the structural stability of the positive electrode material. Through the synergy between the nanoscale phosphate active material and the doping element-modified graphene, the high conductivity of the graphene and the shortened lithium-ion diffusion distance of the nanoscale phosphate active material can be fully utilized, and excellent cycle stability is exhibited.

In some embodiments, based on a total mass of the positive electrode material, a mass percent of the active material is 80% to 90%, and a mass percent of the conductive substrate material is 10% to 20%.

In some embodiments, the phosphate active material is represented by the following chemical formula: LiₓM_{y}PO₄, in which M includes one or more of Zn, Al, Na, K, Mg, Mo, W, Ti, V, Zr, Fe, Ni, Co, Ga, Sn, Sb, Nb, Ge, Mn, Cu, or Cr, 0.9 ≤ x ≤ 1.1, and 0.9 ≤ y ≤ 1.1.

In some embodiments, a volume distribution diameter Dᵥ₅₀ of the phosphate active material is 8 nm to 300 nm, and a volume distribution diameter Dᵥ₉₀ of the phosphate active material is 20 nm to 400 nm.

In some embodiments, the volume distribution diameter Dᵥ₅₀ of the phosphate active material is 20 nm to 200 nm, and the volume distribution diameter Dᵥ₉₀ of the phosphate active material is 50 nm to 350 nm.

In some embodiments, a specific surface area of the phosphate active material is 30 m²/g to 150 m²/g.

In some embodiments, the specific surface area of the phosphate active material is 50 m²/g to 120 m²/g.

In some embodiments, the doping element includes N, S, or a combination thereof.

In some embodiments, the doping element-modified graphene includes doping element-modified graphene nanosheets, and a thickness of the doping element-modified graphene nanosheets is 2 nm to 20 nm.

In some embodiments, based on a total mass of the doping element-modified graphene, a mass percent of the doping element is 5% to 15%.

According to a second aspect, an embodiment of this application provides a method for preparing a positive electrode material, including the following steps:
providing the nanoscale phosphate active material and the doping element-modified graphene separately; and
dispersing the nanoscale phosphate active material and the doping element-modified graphene in a solvent, and performing ultrasonic mixing to obtain the positive electrode material.

In this embodiment of this application, the phosphate active material and the doping element-modified graphene are prepared separately first, and then the two materials are dispersed in a solvent and assembled ultrasonically. Under the action of ultrasonication, the nanoparticles of the phosphate active material can be "anchored" onto the surface of the doping element-modified graphene by a van der Waals force. In this way, the two materials can be compounded under mild conditions. The phosphate active material nanoparticles "anchored" on the surface of the doping element-modified graphene can play an isolating role, and reduce the agglomeration and overlapping between the doping element-modified graphene sheets, thereby improving the dispersion uniformity of the phosphate active material.

In some embodiments, the providing the nanoscale phosphate active material includes: leaving a lithium source, a phosphorus source, and an M source to undergo a hydrothermal reaction to obtain the phosphate active material, where M includes one or more of Zn, Al, Na, K, Mg, Mo, W, Ti, V, Zr, Fe, Ni, Co, Ga, Sn, Sb, Nb, Ge, Mn, Cu, or Cr.

In some embodiments, the lithium source includes one or more of lithium hydroxide, lithium oxide, lithium oxalate, lithium phosphate, lithium carbonate, lithium dihydrogen phosphate, or dilithium hydrogen phosphate.

In some embodiments, the phosphorus source includes one or more of ammonium dihydrogen phosphate, ammonium phosphate, sodium pyrophosphate, ammonium hypophosphite, ammonium polyphosphate, ammonium hexafluorophosphate, diammonium hydrogen phosphate, sodium phosphite, sodium metaphosphate, sodium tripolyphosphate, or sodium hexafluorophosphate.

In some embodiments, the M source includes one or more of M element-containing compounds.

In some embodiments, the providing the doping element-modified graphene includes: leaving graphene oxide, a reducing agent, and a doping element source to undergo a solvothermal reduction reaction to obtain the doping element-modified graphene, where the doping element source includes a nitrogen source, a sulfur source, or a combination thereof.

In some embodiments, the reducing agent includes one or more of hydrazine hydrate, sodium borohydride, or pure hydrazine.

In some embodiments, the nitrogen source includes one or more of ammonia water, ethylenediamine, urea, hydrazine hydrate, acetonitrile, or pyrrole.

In some embodiments, the sulfur source includes one or more of elemental sulfur, hydrogen sulfide, or thiourea.

In some embodiments, a mass ratio of the reducing agent to the graphene oxide is 1: (0.01 to 0.5).

In some embodiments, a mass ratio of the doping element source to the graphene oxide is 1: (0.1 to 10).

In some embodiments, the dispersing the nanoscale phosphate active material and the doping element-modified graphene in a solvent, and performing ultrasonic mixing to obtain the positive electrode material include: dispersing the nanoscale phosphate active material and the doping element-modified graphene in the solvent, and performing ultrasonication at a power of 100 W to 300 W for 2 hours to 12 hours to obtain the positive electrode material.

In some embodiments, a mass ratio of the nanoscale phosphate active material to the doping element-modified graphene is (3 to 19): 1.

According to a third aspect, an embodiment of this application provides a positive electrode plate. The positive electrode plate includes the positive electrode material according to an embodiment of this application in the first aspect or a positive electrode material prepared by the preparation method according to an embodiment of this application in the second aspect.

According to a fourth aspect, an embodiment of this application provides a secondary battery. The secondary battery includes the positive electrode plate according to an embodiment of this application in the third aspect.

According to a fifth aspect, an embodiment of this application provides an electrical device. The electrical device includes the secondary battery according to an embodiment of this application in the fourth aspect.

### BRIEF DESCRIPTION OF DRAWINGS

To describe technical solutions in embodiments of this application more clearly, the following outlines accompanying drawings used in the embodiments of this application. Apparently, a person of ordinary skill in the art may derive other drawings from these accompanying drawings without making any creative efforts.
FIG. 1 is a scanning electron microscope (SEM) image of a positive electrode material according to an embodiment of this application;
FIG. 2 is a schematic diagram of a secondary battery according to an embodiment of this application;
FIG. 3 is an exploded view of the secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of the battery pack shown in FIG. 5 according to an embodiment of this application; and
FIG. 7 is a schematic diagram of an electrical device that uses a secondary battery as a power supply according to an embodiment of this application.

List of reference numerals: 1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following discloses and describes in detail some embodiments of a battery cell, a battery, and an electrical device of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified, the terms "concatenate" and "connect" used herein are understood in a broad sense. For example, a "connection" may be a fixed connection, a detachable connection, or an integrated connection; or may be a direct connection or indirect connection implemented through an intermediary; or may be internal communication between two components. A person of ordinary skill in the art is able to understand the specific meanings of the terms in this application according to specific situations.

Unless otherwise expressly specified herein, the term "active ion" used herein means an ion that can be shuttled between a positive electrode and a negative electrode of a battery cell by intercalation and deintercalation, including but not limited to a lithium ion, a sodium ion, and the like.

The term "a plurality of" referred to herein means two or more (including two). The term "a plurality of types of" referred to herein means two or more types (including two types).

The electronic conductivity and the lithium ion diffusion coefficient of a phosphate active material are relatively low. The low electronic conductivity and lithium ion diffusion coefficient lead to inferior C-rate performance of the phosphate active material. To improve the electron transport and lithium-ion diffusion kinetics of the phosphate active material, it is necessary to design a phosphate active material with more reasonable morphology and composition. Nano-sizing is one of effective means to improve the performance of the phosphate active material. When the phosphate active material is optimized to a nanoscale size, the specific surface area of the material increases, and can provide more active sites. At the same time, the nano-sizing shortens the diffusion distance of lithium ions in the phosphate active material, thereby effectively improving the lithium-ion diffusion performance of the phosphate active material.

However, due to a relatively large specific surface area of the nano-sized phosphate active material, the specific surface energy of nanoparticles is relatively high, so that the nanoscale phosphate active material is more prone to agglomerate, thereby resulting in inferior cycle performance of the material.

In view of the above problems, an embodiment of this application provides a positive electrode material, in which a doping element-modified graphene is used as a substrate for carrying the nanoscale phosphate active material, thereby effectively improving the dispersion performance of the nanoscale phosphate active material, reducing agglomeration, and improving the cycle performance of the positive electrode material.

### Positive electrode material

According to a first aspect, an embodiment of this application provides a positive electrode material. The positive electrode material includes a conductive substrate material and an active material distributed on the conductive substrate material. The active material includes a nanoscale phosphate active material. The conductive substrate material includes doping element-modified graphene. Based on a total mass of the positive electrode material, a mass percent of the active material is 75% to 95%, and a mass percent of the conductive substrate material is 5% to 25%.

The nanoscale phosphate active material means that the particle size of the phosphate active material particles is on a nanoscale. The nanoscale phosphate active material possesses a large specific surface area and provides more active sites. In addition, the nano size shortens the diffusion distance of lithium ions in the phosphate active material, thereby improving the lithium-ion diffusion kinetics of the positive electrode material, and in turn, improving the electrochemical performance of the positive electrode material. Graphene is of excellent conductivity. By modifying the graphene with a doping element, the electron cloud density of the P_{z} orbital of the graphene can be increased, so as to achieve a higher electronic conductivity, and in turn, improve the electrical conductivity of the positive electrode material. At the same time, the doping element-modified graphene can play the role of a conductive agent in the positive electrode material, and can crosslink in the positive electrode material layer to form a continuous conductive network to provide a fast electron transport channel, thereby improving the cycle stability during cycling at a high C-rate.

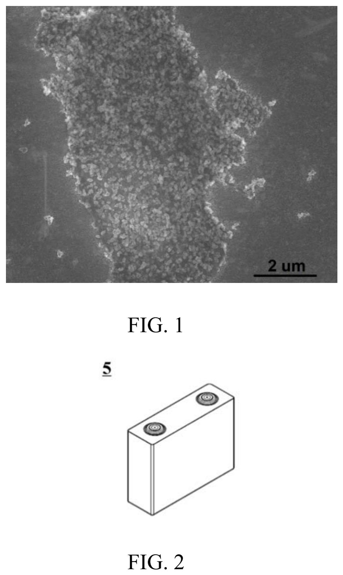

The doping element-modified graphene is used as a carrier of the nanoscale phosphate active material, and the nanoscale phosphate active material is anchored onto the graphene substrate by a van der Waals force, thereby reducing the agglomeration of the phosphate active material nanoparticles and improving the cycle performance of the positive electrode material. At the same time, the phosphate active material nanoparticles carried on the graphene can isolate the doping element-modified graphene sheets stacked up, and reduce the stacking and agglomeration between the graphene sheets. FIG. 1 is a scanning electron microscope (SEM) image of a positive electrode material according to an embodiment of this application. The phosphate active material is evenly dispersed on the surface of the graphene nanosheets.

In this embodiment of this application, the positive electrode material is prepared by using the doping element-modified graphene as a substrate material that carries nanoparticles of the phosphate active material, the doping element-modified graphene serves as a substrate on which the phosphate active material particles are anchored by a van der Waals force, thereby reducing agglomeration of the nanoscale phosphate positive electrode material, making the distribution of the active material more uniform, and in turn, enhancing the effect of an electrolyte solution in infiltrating the active material, and improving cycle performance of the positive electrode material. The nanoscale phosphate active material possesses a relatively large specific surface area and a relatively short lithium-ion diffusion distance, and can improve the lithium-ion diffusion kinetics of the positive electrode material and improve the electrochemical performance of the positive electrode material. The high conductivity of the doping element-modified graphene can improve the electronic conductivity of the positive electrode material. The excellent mechanical properties of the graphene can buffer the stress of the positive electrode material during charge and discharge, and improve the structural stability of the positive electrode material. Through the synergy between the nanoscale phosphate active material and the doping element-modified graphene, the high conductivity of the graphene and the shortened lithium-ion diffusion distance of the nanoscale phosphate active material can be fully utilized, and excellent cycle stability is exhibited.

In some embodiments, based on a total mass of the positive electrode material, a mass percent of the active material may be 80% to 90%, and a mass percent of the conductive substrate material is 10% to 20%.

By controlling the mass percent of the active material and the mass percent of the conductive substrate material in the positive electrode material to fall within the above ranges, the positive electrode material is endowed with higher electrochemical performance while achieving a relatively high electronic conductivity, thereby further improving the cycle stability of the positive electrode material.

In some embodiments, the phosphate active material is represented by the following chemical formula: LiₓM_{y}PO₄, in which M includes one or more of Zn, Al, Na, K, Mg, Mo, W, Ti, V, Zr, Fe, Ni, Co, Ga, Sn, Sb, Nb, Ge, Mn, Cu, or Cr, 0.9 ≤ x ≤ 1.1, and 0.9 ≤ y ≤ 1.1.

In some embodiments, M may be one or more selected from Fe, Mn, Co, Ni, or V, and further optionally, may be Fe.

As an example, the phosphate active material may include one or more of lithium iron phosphate (LiFePO₄), lithium manganese phosphate (LiMnPO₄), lithium manganese iron phosphate (LiMn_{0.4}Fe_{0.6}PO₄), lithium vanadium phosphate (Li₃V₂(PO₄)₃), lithium cobalt phosphate (LiCoPO₄), or lithium nickel phosphate (LiNiPO₄).

In some embodiments, a volume distribution diameter Dᵥ₅₀ of the phosphate active material may be 8 nm to 300 nm, and a volume distribution diameter Dᵥ₉₀ of the phosphate active material may be 20 nm to 400 nm.

The volume distribution diameter Dᵥ₅₀ is a particle diameter corresponding to a point at which the cumulative volume percentage of the sample particles of a material reaches 50% on a volume-based particle size distribution curve. The volume distribution diameter Dᵥ₉₀ is a particle diameter corresponding to a point at which the cumulative volume percentage of the sample particles of the material reaches 90% on the volume-based particle size distribution curve. The volume distribution diameters may be measured by a method and instrument known in the art, for example, measured by using a laser diffractometer in accordance with the standard GB/T 19077-2016 *Particle Size Analysis-Laser Diffraction Method.*

The volume distribution diameters Dᵥ₅₀ and Dᵥ₉₀ of the phosphate active material are both controlled to fall within the above ranges. The phosphate active material of a nanoscale particle size. Within such particle diameter ranges, the phosphate active material possesses a larger specific surface area and provides more active sites for lithium ions. In addition, the diffusion distance of lithium ions is shorter, and the prepared positive electrode material is of higher lithium-ion diffusion kinetics, thereby improving the electrochemical performance of the positive electrode material.

The volume distribution diameter Dᵥ₅₀ of the phosphate active material is optionally 20 nm to 200 nm, and further optionally 50 nm to 150 nm.

The volume distribution diameter Dᵥ₉₀ of the phosphate active material is optionally 50 nm to 350 nm, and further optionally 80 nm to 300 nm.

The volume distribution diameters Dᵥ₅₀ and Dᵥ₉₀ of the phosphate active material are controlled to fall within the above ranges, thereby achieving higher performance and further improving the electrochemical performance of the positive electrode material.

In some embodiments, a specific surface area of the phosphate active material may be 30 m²/g to 150 m²/g. For example, the specific surface area of the phosphate active material may be 30 m²/g, 40 m²/g, 50 m²/g, 60 m²/g, 70 m²/g, 80 m²/g, 90 m²/g, 100 m²/g, 110 m²/g, 120 m²/g, 130 m²/g, 140 m²/g, 150 m²/g, or a value falling within a range formed by any two thereof.

The specific surface area means a total area per unit mass of a material. The larger the specific surface area, the more lithium ion adsorption sites the active material can provide, and the higher electrochemical performance the positive electrode material will exhibit. The specific surface area may be measured by using a method and instrument well-known in the art, for example, by using a method and instrument specified in GB/T 19587-2017 *Determination of Specific Surface Area of Solids by Gas Adsorption Using BET Method.*

In some embodiments, the doping element may include N, S, or a combination thereof.

Nitrogen and sulfur produce a good effect in doping and modifying graphene, and nitrogen atoms and sulfur atoms possess more extranuclear electrons than carbon atoms. Doping graphene with nitrogen and sulfur can increase the electron cloud density of the p_{z} orbital, and in turn, endow the graphene with a higher electronic conductivity. In addition, nitrogen and sulfur as doping elements can form "activated regions" on the surface of graphene. The activated regions can improve the infiltration effect of an electrolyte solution, increase the infiltration and contact area between the electrolyte solution and the graphene surface, and provide more active sites for electrochemical reactions, thereby improving the cycle performance of the positive electrode material.

In some embodiments, the doping element-modified graphene includes doping element-modified graphene nanosheets. A thickness of the doping element-modified graphene nanosheets may be 2 nm to 20 nm, optionally 5 nm to 18 nm, and further optionally 8 nm to 15 nm.

Serving as a carrier of the phosphate active material, the doping element-modified graphene can play a role in dispersing the phosphate active material to reduce aggregation. In addition, the doping element-modified graphene added improves the electronic conductivity of the positive electrode material, thereby improving the electrochemical performance of the positive electrode material. When the thickness of the doping element-modified graphene is controlled to fall within the above range, the conductivity is made to be high. In addition, the phosphate active material distributed on the surface of the modified graphite is of relatively high dispersion density, and the mass percent of the active material is relatively high in the prepared positive electrode material, thereby improving the electrochemical performance of the positive electrode material.

In some embodiments, based on a total mass of the doping element-modified graphene, a mass percent of the doping element may be 5% to 15%. For example, the mass percent of the doping element may be 5%, 6%, 7%, 8%, 9%, 10%, 11%, 12%, 13%, 14%, 15%, or a value falling within a range formed by any two thereof.

When the mass percent of the doping element falls within the above range, the graphene is endowed with a higher conductivity while achieving good mechanical properties. When the mass percent of the doping element is relatively low, the effect of modifying the graphene is relatively weak, and the conductivity and the infiltration effect of the graphene are improved to a lesser degree. When the mass percent of the doping element is relatively high, the amount of doping element introduced into the positive electrode material will be relatively large. The doping element produces some side reactions in the positive electrode material, thereby adversely affecting the capacity and cycle performance of the positive electrode material.

The mass percent of the doping element in the doping element-modified graphene may be measured by a method known in the art, for example, by using a scanning electron microscope mapping (SEM mapping) method.

### Method for preparing a positive electrode material

According to a second aspect, an embodiment of this application provides a method for preparing a positive electrode material, including the following steps:
S100: Provide the nanoscale phosphate active material and the doping element-modified graphene separately.
S200: Disperse the nanoscale phosphate active material and the doping element-modified graphene in a solvent, and perform ultrasonic mixing to obtain the positive electrode material.

The doping element-modified graphene needs to be prepared by a high-temperature thermal reduction method, typically using graphene oxide as a raw material. The graphene oxide is reduced to graphene through a thermal reduction reaction in a high-temperature environment, and the doping element dopes and modifies the graphene. The precursor for preparing the phosphate active material is of relatively high reactivity, and is prone to react with groups on the graphene oxide during the reaction of reducing the graphene oxide, thereby making it difficult to obtain a pure olivine-type phosphate active material, and giving rise to heterogeneous phases. Therefore, the conventional *in-situ* synthesis method is hardly applicable to the compounding of the phosphate active material and the doping element-modified graphene in this embodiment of this application.

In this embodiment of this application, to overcome the problem that the reaction condition differs between a preparation process of the phosphate active material and a preparation process of the doping element-modified graphene, the phosphate active material and the doping element-modified graphene are prepared separately first, and then the two materials are dispersed in a solvent and assembled ultrasonically. Under the action of ultrasonication, the particles of the phosphate active material can be "anchored" onto the surface of the doping element-modified graphene by a van der Waals force. In this way, the two materials can be compounded under mild conditions. The phosphate active material nanoparticles "anchored" on the surface of the doping element-modified graphene can play an isolating role, and reduce the agglomeration and overlapping between the doping element-modified graphene sheets, thereby improving the dispersion uniformity of the phosphate active material.

The method for preparing a positive electrode material according to this embodiment of this application can load the nanoparticles of the phosphate active materials of different morphologies, for example, lithium iron phosphate active material nanoneedles, nanorods, nanoparticles, nanocubes, and nanoflowers, onto the surface of the doping element-modified graphene. The morphology of the resultant positive electrode material is controllable.

In some embodiments, in step S 100, the nanoscale phosphate active material may be prepared by the following method:
Leaving a lithium source, a phosphorus source, and an M source to undergo a hydrothermal reaction to obtain a nanoscale phosphate active material, where M includes one or more of Zn, Al, Na, K, Mg, Mo, W, Ti, V, Zr, Fe, Ni, Co, Ga, Sn, Sb, Nb, Ge, Mn, Cu, or Cr.

The phosphate active material may be prepared by a hydrothermal method. By regulating the order in which the lithium source, the phosphorus source, and M source are added, and by regulating the reaction conditions, the phosphate active materials of different morphologies can be formed under control.

In some embodiments, the reaction temperature of the hydrothermal reaction may be 170 °C to 190 °C.

In some embodiments, the lithium source may include one or more of lithium hydroxide, lithium oxide, lithium oxalate, lithium phosphate, lithium carbonate, lithium dihydrogen phosphate, or dilithium hydrogen phosphate.

In some embodiments, the phosphorus source may include one or more of ammonium dihydrogen phosphate, ammonium phosphate, sodium pyrophosphate, ammonium hypophosphite, ammonium polyphosphate, ammonium hexafluorophosphate, diammonium hydrogen phosphate, sodium phosphite, sodium metaphosphate, sodium tripolyphosphate, or sodium hexafluorophosphate.

In some embodiments, the M source may include one or more of M element-containing compounds. For example, the M source may be a Fe-containing compound, for example, one or more of ferrous sulfate, ferrous nitrate, ferrous phosphate, ferrous oxalate, or ferrous pyrophosphate. The M source may be a Mn-containing compound, for example, one or more of manganese sulfate, manganese nitrate, manganese carbonate, manganese oxalate, manganese acetate, or manganese chloride. The M source may be a cobalt-containing compound, for example, one or more of cobalt sulfate, cobalt nitrate, cobalt carbonate, cobalt acetate, or cobalt chloride. The M source may be a vanadium-containing compound, for example, one or more of vanadyl sulfate or vanadyl oxalate. The M source may be a nickel-containing compound, for example, one or more of nickel sulfate or nickel nitrate.

In some embodiments, in step S 100, the doping element-modified graphene is prepared by the following method: leaving graphene oxide, a reducing agent, and a doping element source to undergo a solvothermal reduction reaction to obtain the doping element-modified graphene, where the doping element source includes a nitrogen source, a sulfur source, or a combination thereof.

In some embodiments, the reducing agent may include one or more of hydrazine hydrate, sodium borohydride, or pure hydrazine.

In some embodiments, the nitrogen source may include one or more of ammonia water, ethylenediamine, urea, hydrazine hydrate, acetonitrile, or pyrrole.

In some embodiments, the sulfur source may include one or more of elemental sulfur, hydrogen sulfide, or thiourea.

In some embodiments, the mass ratio of the reducing agent to the graphene oxide may be 1: (0.01 to 0.5), optionally 1: (0.05 to 0.45), and further optionally 1: (0.1 to 0.4).

When the mass ratio of the reducing agent to the graphene oxide is controlled to fall within the above range, the reducing agent is made to react with the graphene oxide sufficiently, thereby reducing the oxygen-containing groups on the surface of the graphene oxide, and improving the conductivity of the graphene.

In some embodiments, the mass ratio of the doping element source to the graphene oxide may be 1: (0.1 to 10), optionally 1: (0.5 to 8), and further optionally 1: (1 to 5).

By regulating the mass ratio of the doping element source to the graphene oxide, the doping element-modified graphene doped with different amounts of doping element can be obtained.

In some embodiments, the reaction temperature of the solvothermal reduction reaction may be 150 °C to 170 °C.

In some embodiments, step S200 includes: dispersing the nanoscale phosphate active material and the doping element-modified graphene in a solvent, and perform ultrasonication at a power of 100 W to 300 W for 2 to 12 hours to obtain a positive electrode material.

In some embodiments, the ultrasonication power may be 100 W to 300 W, optionally 120 W to 280 W, and further optionally 150 W to 250 W.

In some embodiments, the ultrasonication time may be 2 to 12 hours, and optionally 5 to 10 hours.

In some embodiments, the solvent may include tetrahydrofuran.

In some embodiments, the mass ratio of the nanoscale phosphate active material to the doping element-modified graphene may be (3 to 19): 1, and optionally (4 to 14): 1.

By regulating the mass ratio of the phosphate active material to the doping element-modified graphene to fall within the above range, the loading amount and distribution of the phosphate active material on the surface of the doping element-modified graphene can be adjusted to obtain a positive electrode material that exhibits good electrochemical performance and cycle stability.

### Positive electrode plate

According to a third aspect, an embodiment of this application provides a positive electrode plate. The positive electrode plate includes the positive electrode material according to an embodiment of this application in the first aspect or a positive electrode material prepared by the preparation method according to an embodiment of this application in the second aspect.

In some embodiments, the positive electrode plate includes a positive current collector and a positive electrode material layer disposed on at least one side of the positive current collector. As an example, the positive current collector includes two surfaces opposite to each other in a thickness direction thereof. The positive electrode material layer is disposed on either or both of the two opposite surfaces of the positive current collector.

In some embodiments, based on the total mass of the positive electrode material layer, the positive electrode material layer includes a positive electrode material added at a mass percent of 80% to 98%.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be prepared by overlaying the polymer material substrate with a metal material such as aluminum, aluminum alloy, copper, nickel, nickel alloy, titanium, titanium alloy, silver, or silver alloy. The polymer material substrate may be a substrate such as polypropylene (PP), polyethylene terephthalate (PET), polybutylene terephthalate (PBT), polystyrene (PS), or polyethylene (PE).

In some embodiments, the thickness of the positive current collector is 4 µm to 20 µm, optionally 6 µm to 18 µm, and further optionally 8 µm to 16 µm.

In some embodiments, the positive material layer further optionally includes a binder. As an example, the binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the mass percent of the binder in the positive electrode material layer is greater than or equal to 0.5%, thereby favorably achieving good bonding performance.

In some embodiments, the positive electrode material layer further includes a conducive agent. As an example, the conductive agent may include one or more of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### Secondary battery

According to a fourth aspect, an embodiment of this application provides a secondary battery. The secondary battery includes the positive electrode plate according to an embodiment of this application in the third aspect.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive material layer that overlays at least one surface of the positive current collector. The positive material layer includes the positive electrode material according to the first aspect of this application.

### [Negative electrode plate]

In some embodiments, the negative electrode plate includes a negative current collector and a negative electrode material layer disposed on at least one surface of the negative current collector. The negative electrode material layer includes a negative active material.

As an example, the negative current collector includes two surfaces opposite to each other in a thickness direction of the current collector. The negative electrode material layer is disposed on either or both of the two opposite surfaces of the negative current collector. The negative current collector may be a metal foil, a carbon-coated metal foil, or a porous metal sheet, or the like, and optionally a copper foil.

As an example, the negative electrode material layer includes a negative active material, optionally a conductive agent, and optionally a binder. The conductive agent is configured to improve the electrical conductivity of the negative electrode material layer. The binder is configured to firmly bind the negative active material and the binder to the negative current collector. The types of the conductive agent and the binder are not particularly limited herein, and may be selected according to actual needs.

As an example, the negative active material may include one or more of natural graphite, artificial graphite, mesocarbon microbeads (MCMB), hard carbon, or soft carbon.

As an example, the conductive agent may include one or more of superconducting carbon, acetylene black, carbon black, Ketjen black, carbon dots, carbon nanotubes, graphene, or carbon nanofibers; and the binder may be one or more of styrene-butadiene rubber (SBR), styrene-butadiene copolymer (SBCs), water-based acrylic resin (water-based acrylic resin), or carboxymethyl cellulose (CMC).

The negative electrode material layer further optionally includes a thickener such as sodium carboxymethyl cellulose (CMC).

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte solution may include an organic solvent and an electrolyte salt.

In some embodiments, the organic solvent may be at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte salt may include anions. The anions may include one or more of bis(fluorosulfonyl)imide anion (FSI⁻), bis(trifluoromethanesulfonyl)imide anion (TFSI⁻), dioxalatoborate anion (BOB⁻), difluoro(oxalato)borate anion (DFOB⁻), difluoro(bisoxalato)phosphate anion (DFOP⁻), tetrafluoro(oxalato)phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), or trifluoromethanesulfonate anion (CF₃SO₃⁻).

In some embodiments, the electrolyte salt may include cations. The cations may include one or more of lithium ions or sodium ions.

In some embodiments, the concentration of the electrolyte salt may be 0.3 mol/L or more, and optionally 0.7 mol/L or more. Further, the concentration of the electrolyte salt may be 4 mol/L or less, optionally 2.5 mol/L or less, or 1.7 mol/L or less. When the concentration of the electrolyte salt falls within the above range, the electrolyte solution is endowed with an appropriate ionic conductivity.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that includes at least one of glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

The shape of the secondary battery is not particularly limited in this application, and may be cylindrical, prismatic or any other shape. FIG. 2 shows a prismatic secondary battery 5 as an example.

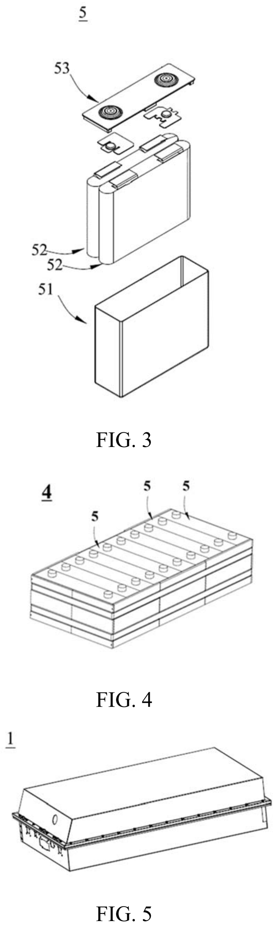

In some embodiments, referring to FIG. 3, the outer package may include a housing 51 and a top cap assembly 53. The housing 51 may include a bottom plate and a side plate connected to the bottom plate. The bottom plate and the side plate close in to form an accommodation cavity. The housing 51 is provided with an opening that communicates to the accommodation cavity. The top cap assembly 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

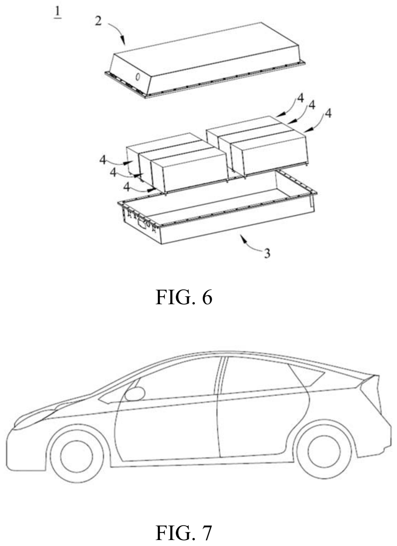

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### Electrical device

According to a fifth aspect, an embodiment of this application provides an electrical device. The electrical device includes at least one of the secondary battery, battery module, or battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

A positive electrode material is prepared by the following method:
**Preparing doping element-modified graphene**
   S10. Disperse graphene oxide in deionized water, and adjusting the concentration of the graphene oxide dispersion to 2 mg/mL.
   S20. Take 25 mL of graphene oxide dispersion, adjusting the pH value of the dispersion to 10 by using 30% ammonia water, and then adding 1.5 mL of hydrazine hydrate, and stirring the mixture to react for 10 min.
   S30. Transfer the reaction solution to a polytetrafluoroethylene reactor, react at 160 °C for 3 hours, collect the solid product by centrifugation, and then freeze-dry the product for 48 hours to obtain nitrogen-doped graphene nanosheets.
**Preparing a phosphate active material**
   S40. Take 20 mL of ethylene glycol solution, add 4 mmol FeSO₄·7H₂O and 4 mmol H₃PO₄ separately, perform ultrasonication at a power of 100 W for 15 minutes, and then add 12 mmol LiOH·H₂O, stir well and transfer the mixture into the reactor, and keep the temperature at 180 °C for 10 hours.
   S50. Filter the reaction solution, wash the resultant solid with deionized water and anhydrous ethanol in sequence, and then freeze-dry the resulting solid product in vacuum for 24 hours to obtain lithium iron phosphate nanoneedles.
**Preparing a positive electrode material**
   S60. Disperse lithium iron phosphate nanoneedles and nitrogen-doped graphene nanosheets in tetrahydrofuran at a mass ratio of 9: 1, perform ultrasonication at a power of 160 W for 10 hours, and then collect the solid product by suction-filtration, and vacuum-dry the solid product at 40 °C for 12 hours to obtain a positive electrode material.

### Embodiments 2 to 14

The preparation method of the positive electrode material is identical to that in Embodiment 1 except that the mixing ratio between raw materials of the positive electrode material is adjusted, as detailed in Table 1.

### Embodiment 15

This embodiment differs from Embodiment 1 in that the phosphate active material is lithium iron phosphate nanorods, and the specific preparation method is as follows:
S40. Take 20 mL of ethylene glycol solution, add 4 mmol FeSO₄·7H₂O and 4 mmol H₃PO₄ separately, perform ultrasonication at a power of 100 W for 15 minutes, and then add 10 mmol LiOH·H₂O, stir well and transfer the mixture into the reactor, and keep the temperature at 180 °C for 10 hours.
S50. Filter the reaction solution, wash the resultant solid with deionized water and anhydrous ethanol in sequence, and then freeze-dry the resulting solid product in vacuum for 24 hours to obtain lithium iron phosphate nanorods.

### Embodiment 16

This embodiment differs from Embodiment 1 in that the phosphate active material is lithium iron phosphate nanoparticles, and the specific preparation method is as follows:
S40. Take 20 mL of ethylene glycol solution, add 4 mmol LiOH·H₂O and 4 mmol H₃PO₄ separately, perform ultrasonication at a power of 100 W for 15 minutes, and then add 12 mmol FeSO₄·7H₂O, stir well and transfer the mixture into the reactor, and keep the temperature at 180 °C for 10 hours.
S50. Filter the reaction solution, wash the resultant solid with deionized water and anhydrous ethanol in sequence, and then freeze-dry the resulting solid product in vacuum for 24 hours to obtain lithium iron phosphate nanoparticles.

### Embodiment 17

This embodiment differs from Embodiment 1 in that the phosphate active material is lithium iron phosphate nanocubes, and the specific preparation method is as follows:
S40. Take 20 mL of ethylene glycol solution, add 4 mmol LiOH·H₂O and 4 mmol H₃PO₄ separately, perform ultrasonication at a power of 100 W for 15 minutes, and then add 10 mmol FeSO₄·7H₂O, stir well and transfer the mixture into the reactor, and keep the temperature at 180 °C for 10 hours.
S50. Filter the reaction solution, wash the resultant solid with deionized water and anhydrous ethanol in sequence, and then freeze-dry the resulting solid product in vacuum for 24 hours to obtain lithium iron phosphate nanocubes.

### Comparative Embodiments 1 to 3

The preparation method of the positive electrode material is identical to that in Embodiment 1 except that the mixing ratio between raw materials of the positive electrode material is adjusted, as detailed in Table 1.

### Comparative Embodiment 4

The positive electrode material is prepared by an *in-situ* synthesis method. The preparation method of the nitrogen-doped graphene is identical to that in Embodiment 1. The method for preparing the positive electrode material includes the following steps:
Dispersing 20 mg of nitrogen-doped graphene nanosheets ultrasonically in 100 mL of LiOH·H₂O aqueous solution with a concentration of 0.3 mol/L, and adding 100 mL of H₃PO₄ with a concentration of 0.1 mol/L while stirring vigorously. Subsequently, adding 100 mL of FeSO₄·7H₂O aqueous solution with a concentration of 0.1 mol/L and glucose with a concentration of 0.1 mol/L. Stirring well, transferring the mixture to a reactor, and keeping the temperature at 150 °C for 10 hours. Cooling the mixture to room temperature, centrifuging the mixture to obtain a solid product, washing the solid product with deionized water, and vacuum-drying the solid product to obtain a lithium iron phosphate nitrogen-doped graphene composite material.

### Test Part

The electronic conductivity of the positive electrode material is measured by the following method:
The electronic conductivity is measured by a four-point probe method with reference to the standard GB/T 30835-2014 *Lithium Iron Phosphate-Carbon Composite Positive Electrode Materials for Lithium-ion Batteries.*

A secondary battery containing the positive electrode material is subjected to a cycle performance test. The specific test method is as follows:

### Preparing a positive electrode plate

Mixing the positive electrode material, polyvinylidene difluoride as a binder, and Super P as a conductive agent at a mass ratio of 80: 10: 10, and an appropriate amount of N-methyl-pyrrolidone (NMP) solvent, and stirring well to obtain a positive electrode slurry. Coating both surfaces of a positive current collector aluminum foil with the positive electrode slurry, and performing drying and cold-pressing to form a positive electrode film layer and obtain a positive electrode plate.

### Preparing a negative electrode plate

Mixing graphite as a negative active material, Super P as a conductive agent, carboxymethyl cellulose (CMC) as a thickener, and styrene-butadiene rubber (SBR) as a binder at a mass ratio of 80: 15: 3: 2 in deionized water, stirring well to form a negative electrode slurry in which the solid content is 30 wt%. Applying the negative electrode slurry evenly onto a current collector copper foil, and drying the slurry at 85 °C. Subsequently, performing cold-pressing, edge trimming, cutting, and slitting, and then drying the resulting plate in a 120 °C vacuum environment for 12 hours to obtain a negative electrode plate.

### Preparing a separator

Using a 16 µm-thick polyethylene film as a separator.

### Preparing a secondary battery

Stacking the positive electrode plate, the separator, and the negative electrode plate in sequence so that the separator is located between the positive electrode plate and the negative electrode plate, and then winding the stacked structure to obtain an electrode assembly. Welding tabs to the electrode assembly, and placing the electrode assembly into a housing, injecting the electrolyte solution, and then performing sealing, static standing, chemical formation, shaping, and capacity test to complete preparing a secondary battery. The electrolyte salt in the electrolyte solution is LiFSI added at a concentration of 1 mol/L. The solvent of the electrolyte solution is ethylene glycol dimethyl ether (DME).

The cycle performance of the secondary battery is tested by the following method:
Charging a secondary battery at a constant current of 1C at 25 °C until a cut-off voltage, leaving the battery to stand for 5 minutes, and then discharging the battery at a constant current of 1C until the voltage drops to 2.0 V, and recording the capacity at this time as an initial capacity C₀. Repeating the above charge-discharge step 1 for the secondary battery, and recording the discharge capacity Cₙ of the secondary battery at the end of 100 charge-discharge cycles. Calculating the capacity retention rate of the battery at the end of the n^{th} cycle as: Pₙ = Cₙ/C₀ × 100%. The cut-off voltage in the constant-current charging stage of the secondary battery assembled by using the lithium iron phosphate positive electrode material is 3.65 V, and the cut-off voltage in the constant-current charging stage of a secondary battery assembled by using other phosphate active materials is 4.1 V.

The performance test data are detailed in Table 1.

**Table 1 (To be continued)**

| | Phosphate active material | | | | Doping element-modified graphene | |
|---|---|---|---|---|---|---|
| | Type | Specific surface area (m²/g) | Dᵥ₅₀ (nm) | Dᵥ₉₀ (nm) | Doping element | Doping element source |
| Embodiment 1 | LiFePO₄ | 32 | 70 | 110 | N | Hydrazine hydrate |
| Embodiment 2 | LiFePO₄ | 32 | 70 | 110 | N | Hydrazine hydrate |
| Embodiment 3 | LiFePO₄ | 32 | 70 | 110 | N | Hydrazine hydrate |
| Embodiment 4 | LiFePO₄ | 32 | 70 | 110 | N | Hydrazine hydrate |
| Embodiment 5 | LiMnPO₄ | 31 | 72 | 108 | N | Hydrazine hydrate |
| Embodiment 6 | LiMn_{0.4}Fe_{0.6} PO₄ | 32 | 71 | 107 | N | Hydrazine hydrate |
| Embodiment 7 | LiFePO₄ | 26 | 98 | 126 | N | Hydrazine hydrate |
| Embodiment 8 | LiFePO₄ | 20 | 140 | 195 | N | Hydrazine hydrate |
| Embodiment 9 | LiFePO₄ | 12 | 205 | 280 | N | Hydrazine hydrate |
| Embodiment 10 | LiFePO₄ | 32 | 70 | 110 | N | Hydrazine hydrate |
| Embodiment 11 | LiFePO₄ | 32 | 70 | 110 | N | Hydrazine hydrate |
| Embodiment 12 | LiFePO₄ | 32 | 70 | 110 | N | Ethylenediamine |
| Embodiment 13 | LiFePO₄ | 32 | 70 | 110 | S | Elemental S |
| Embodiment 14 | LiFePO₄ | 32 | 70 | 110 | S | Hydrogen sulfide |
| Embodiment 15 | LiFePO₄ | 35 | 37 | 82 | N | Hydrazine hydrate |
| Embodiment 16 | LiFePO₄ | 102 | 20 | 50 | N | Hydrazine hydrate |
| Embodiment 17 | LiFePO₄ | 48 | 50 | 70 | N | Hydrazine hydrate |
| Comparative Embodiment 1 | LiFePO₄ | 32 | 70 | 110 | N | Hydrazine hydrate |
| Comparative Embodiment 2 | LiFePO₄ | 32 | 70 | 110 | N | Hydrazine hydrate |
| Comparative Embodiment 3 | LiFePO₄ | 11.7 | 2100 | 5300 | N | Hydrazine hydrate |
| Comparative Embodiment 4 | LiFePO₄ | 22 | 102 | 141 | N | Hydrazine hydrate |

**Table 1 (Continued)**

| | Doping element-modified graphene | | Mass percent of phosphate active material in positive electrode material (%) | Mass percent of doping element-modified graphene in positive electrode material (%) | Electronic conductivity (S/cm) | 100^{th}-cycle capacity retention rate after cycling at 1C (%) |
|---|---|---|---|---|---|---|
| | Mass percent of doping element (%) | Thickness of graphene (nm) | | | | |
| Embodiment 1 | 7.8 | 5 to 15 | 95 | 5 | 1.65 | 98 |
| Embodiment 2 | 7.8 | 5 to 15 | 75 | 25 | 2.62 | 83 |
| Embodiment 3 | 7.8 | 5 to 15 | 85 | 15 | 1.84 | 91 |
| Embodiment 4 | 7.8 | 5 to 15 | 90 | 10 | 1.46 | 98.5 |
| Embodiment 5 | 7.8 | 5 to 15 | 90 | 10 | 1.39 | 88 |
| Embodiment 6 | 7.8 | 5 to 15 | 90 | 10 | 1.42 | 89 |
| Embodiment 7 | 7.8 | 5 to 15 | 90 | 10 | 1.48 | 95 |
| Embodiment 8 | 7.8 | 5 to 15 | 90 | 10 | 1.49 | 91 |
| Embodiment 9 | 7.8 | 5 to 15 | 90 | 10 | 1.52 | 85 |
| Embodiment 10 | 5 | 5 to 15 | 90 | 10 | 0.92 | 90 |
| Embodiment 11 | 15 | 5 to 15 | 90 | 10 | 1.27 | 92.5 |
| Embodiment 12 | 12 | 5 to 15 | 90 | 10 | 1.12 | 90 |
| Embodiment 13 | 12 | 5 to 15 | 90 | 10 | 1.21 | 91 |
| Embodiment 14 | 12 | 5 to 15 | 90 | 10 | 1.26 | 91.5 |
| Embodiment 15 | 7.8 | 5 to 15 | 90 | 10 | 1.32 | 96.5 |
| Embodiment 16 | 7.8 | 5 to 15 | 90 | 10 | 1.45 | 93 |
| Embodiment 17 | 7.8 | 5 to 15 | 90 | 10 | 1.38 | 90 |
| Comparative Embodiment 1 | 7.8 | 5 to 15 | 100 | 0 | 0.09 | 89.5 |
| Comparative Embodiment 2 | 7.8 | 5 to 15 | 70 | 30 | 2.96 | 80 |
| Comparative Embodiment 3 | 7.8 | 5 to 15 | 95 | 5 | 0.03 | 72 |
| Comparative Embodiment 4 | 7.8 | 5 to 15 | 95 | 5 | 0.75 | 81 |

As can be seen from the data in Table 1, the positive electrode materials in Embodiment 1 and Comparative Embodiment 4 are prepared by different methods. Compared with the *in-situ* synthesis preparation method in Comparative Embodiment 1, the positive electrode material prepared by a distribution synthesis method in Embodiment 1 possesses a higher electronic conductivity, and the secondary battery assembled by using the positive electrode material exhibits higher cycle performance.

The phosphate active materials of different particle diameters are used in Embodiment 1 and Comparative Embodiment 3 respectively. As can be seen, the positive electrode material made of a nanoscale phosphate active material possesses a higher electronic conductivity.

As can be seen from the data of Embodiments 1 to 4 and Comparative Embodiments 1 to 2, the doping element-modified graphene can significantly improve the electronic conductivity of the positive electrode material. By adjusting the mixing ratio between the phosphate active material and the doping element-modified graphene in the positive electrode material, this application can further improve the conductivity of the positive electrode material and the cycle performance of the secondary battery.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. A positive electrode material, comprising a conductive substrate material and an active material distributed on the conductive substrate material, wherein
the active material comprises a nanoscale phosphate active material, and the conductive substrate material comprises doping element-modified graphene; and
based on a total mass of the positive electrode material, a mass percent of the active material is 75% to 95%, and a mass percent of the conductive substrate material is 5% to 25%.

2. The positive electrode material according to claim 1, wherein, based on the total mass of the positive electrode material, the mass percent of the active material is 80% to 90%, and the mass percent of the conductive substrate material is 10% to 20%.

3. The positive electrode material according to claim 1 or 2, wherein the phosphate active material is represented by the following chemical formula: LiₓM_{y}PO₄, in which M comprises one or more of Zn, Al, Na, K, Mg, Mo, W, Ti, V, Zr, Fe, Ni, Co, Ga, Sn, Sb, Nb, Ge, Mn, Cu, or Cr, 0.9 ≤ x ≤ 1.1, and 0.9 ≤ y ≤ 1.1.

4. The positive electrode material according to any one of claims 1 to 3, wherein a volume distribution diameter Dᵥ₅₀ of the phosphate active material is 8 nm to 300 nm, and a volume distribution diameter Dᵥ₉₀ of the phosphate active material is 20 nm to 400 nm; and/or
a specific surface area of the phosphate active material is 30 m²/g to 150 m²/g.

5. The positive electrode material according to claim 4, wherein the volume distribution diameter Dᵥ₅₀ of the phosphate active material is 20 nm to 200 nm, and the volume distribution diameter Dᵥ₉₀ of the phosphate active material is 50 nm to 350 nm; and/or
the specific surface area of the phosphate active material is 50 m²/g to 120 m²/g.

6. The positive electrode material according to any one of claims 1 to 5, wherein the doping element comprises N, S, or a combination thereof.

7. The positive electrode material according to any one of claims 1 to 6, wherein the doping element-modified graphene comprises doping element-modified graphene nanosheets, and a thickness of the doping element-modified graphene nanosheets is 2 nm to 20 nm; and/or
based on a total mass of the doping element-modified graphene, a mass percent of the doping element is 5% to 15%.

8. A method for preparing the positive electrode material according to any one of claims 1 to 7, wherein the method comprises the following steps:
providing the nanoscale phosphate active material and the doping element-modified graphene separately; and
dispersing the nanoscale phosphate active material and the doping element-modified graphene in a solvent, and performing ultrasonic mixing to obtain the positive electrode material.

9. The method for preparing the positive electrode material according to claim 8, wherein the providing the nanoscale phosphate active material comprises: leaving a lithium source, a phosphorus source, and an M source to undergo a hydrothermal reaction to obtain the phosphate active material, wherein M comprises one or more of Zn, Al, Na, K, Mg, Mo, W, Ti, V, Zr, Fe, Ni, Co, Ga, Sn, Sb, Nb, Ge, Mn, Cu, or Cr.

10. The method for preparing the positive electrode material according to claim 9, wherein the lithium source comprises one or more of lithium hydroxide, lithium oxide, lithium oxalate, lithium phosphate, lithium carbonate, lithium dihydrogen phosphate, or dilithium hydrogen phosphate; and/or
the phosphorus source comprises one or more of ammonium dihydrogen phosphate, ammonium phosphate, sodium pyrophosphate, ammonium hypophosphite, ammonium polyphosphate, ammonium hexafluorophosphate, diammonium hydrogen phosphate, sodium phosphite, sodium metaphosphate, sodium tripolyphosphate, or sodium hexafluorophosphate; and/or
the M source comprises one or more of M element-containing compounds.

11. The method for preparing the positive electrode material according to claim 8, wherein the providing the doping element-modified graphene comprises: leaving graphene oxide, a reducing agent, and a doping element source to undergo a solvothermal reduction reaction to obtain the doping element-modified graphene, wherein the doping element source comprises a nitrogen source, a sulfur source, or a combination thereof.

12. The method for preparing the positive electrode material according to claim 11, wherein the reducing agent comprises one or more of hydrazine hydrate, sodium borohydride, or pure hydrazine; and/or
the nitrogen source comprises one or more of ammonia water, ethylenediamine, urea, hydrazine hydrate, acetonitrile, or pyrrole; and/or
the sulfur source comprises one or more of elemental sulfur, hydrogen sulfide, or thiourea.

13. The method for preparing the positive electrode material according to claim 11, wherein a mass ratio of the reducing agent to the graphene oxide is 1: (0.01 to 0.5); and/or
a mass ratio of the doping element source to the graphene oxide is 1: (0.1 to 10).

14. The method for preparing the positive electrode material according to any one of claims 8 to 13, wherein the dispersing the nanoscale phosphate active material and the doping element-modified graphene in a solvent, and performing ultrasonic mixing to obtain the positive electrode material comprise: dispersing the nanoscale phosphate active material and the doping element-modified graphene in the solvent, and performing ultrasonication at a power of 100 W to 300 W for 2 hours to 12 hours to obtain the positive electrode material.

15. The method for preparing the positive electrode material according to claim 14, wherein a mass ratio of the nanoscale phosphate active material to the doping element-modified graphene is (3 to 19): 1.

16. A positive electrode plate, comprising the positive electrode material according to any one of claims 1 to 7 or a positive electrode material prepared by the preparation method according to any one of claims 8 to 15.

17. A secondary battery, comprising the positive electrode plate according to claim 16.

18. An electrical device, comprising the secondary battery according to claim 17.
